Europäisches Patentamt

European Patent Office

Office européen des brevets

(11) Veröffentlichungsnummer: **0 177 879**
A2

## (12) EUROPÄISCHE PATENTANMELDUNG

(21) Anmeldenummer: **85112402.4**

(22) Anmeldetag: **01.10.85**

(51) Int. Cl.⁴: **H 02 H 3/33**

(30) Priorität: **06.10.84 DE 3436746**

(43) Veröffentlichungstag der Anmeldung: **16.04.86**
**Patentblatt 86/16**

(84) Benannte Vertragsstaaten: **AT BE CH DE FR GB IT LI LU NL SE**

(71) Anmelder: **WIK Elektro-Hausgeräte-Vertriebsgesellschaft mbH & Co. Produktions-Kommanditgesellschaft, Neustrasse 164, D-4300 Essen 11 (DE)**

(72) Erfinder: **Hafemann, Klaus, Termiedenhof 20, D-4300 Essen 11 (DE)**
Erfinder: **Kullik, Günter, Mettgenberg, D-5882 Meinerzhagen 1 (DE)**

(74) Vertreter: **Gesthuysen, Hans Dieter, Dipl.-Ing. et al, Patentanwälte Gesthuysen + von Rohr Huyssenallee 15 Postfach 10 13 33, D-4300 Essen 1 (DE)**

(54) **Fehlerstromschutzschaltung.**

(57) Dargestellt und beschrieben ist eine Fehlerstromschutzschaltung (1) mit einem Summenstromwandler (4), der zwei Primärwicklungen (5, 6) und eine Sekundärwicklung (7) aufweist, und mit einer Auslöseschaltung (8), die einen Auslösetransistor (9) und zwei Steuereingänge (10, 11) aufweist und der Sekundärwicklung (7) des Summenstromwandlers (4) nachgeschaltet ist.

Bei der erfindungsgemäßen Fehlerstromschutzschaltung (1) ist die Ansprechempfindlichkeit dadurch erhöht, daß an die Sekundärwicklung (7) des Summenstromwandlers (4) eine Gleichrichterschaltung (12) angeschlossen ist, daß die Gleichrichterschaltung (12) ein Halbleiterventil (13) und einen Speicher bzw. Glättungskondensator (14) enthält, daß der Pluspol (15) der Gleichrichterschaltung (12) an den ersten Steuereingang (10) der Auslöseschaltung (8) angeschlossen ist und daß zwischen dem Minuspol (16) der Gleichrichterschaltung (12) und dem zweiten Steuereingang (11) der Auslöseschaltung (8) eine von einem Hilfsstrom durchflossene Hilfsimpedanz (17) vorgesehen ist. Vorzugsweise ist die Gleichrichterschaltung (12) als Villardschaltung ausgeführt und als Hilfsimpedanz (17) eine Hilfsdiode vorgesehen.

Die Erfindung betrifft eine Fehlerstromschutzschaltung mit einem Summenstromwandler, der mindestens zwei Primärwicklungen und mindestens eine Sekundärwicklung aufweist, und mit einer Auslöseschaltung, die mindestens einen Auslösetransistor und zwei Steuereingänge aufweist und der Sekundärwicklung
des Summenstromwandlers nachgeschaltet ist.

Bei Fehlerstromschutzschaltungen der hier in Rede stehenden Art kann die
Auslöseschaltung statt eines Auslösetransistors auch einen Auslösethyristor od. dgl. oder z. B. einen Differenzverstärker od. dgl. aufweisen.

Im Stand der Technik, von dem die Erfindung ausgeht (vgl. die DE-PS 11 90 554),
wird der Auslösetransistor der Auslöseschaltung direkt von der Sekundärwicklung des Summenstromwandlers angesteuert. Die Ansprechempfindlichkeit der
bekannten Fehlerstromschutzschaltung ist also vorgegeben durch die Ansprechschwelle des Auslösetransistors, die z. B. bei ca. 0,6 V liegt. Damit liegt
dann bei noch vertretbarem Aufwand für den Summenstromwandler die Ansprechempfindlichkeit der Fehlerstromschutzschaltung selbst bei ca. 30 mA.

Der Erfindung liegt nun die Aufgabe zugrunde, bei der Fehlerstromschutzschaltung, von der die Erfindung ausgeht, mit einfachen Mitteln die Ansprechempfindlichkeit zu erhöhen.

Die erfindungsgemäße Fehlerstromschutzschaltung, bei der die zuvor hergeleitete und dargelegte Aufgabe gelöst ist, ist zunächst und im wesentlichen
dadurch gekennzeichnet, daß an die Sekundärwicklung des Summenstromwandlers
eine Gleichrichterschaltung angeschlossen ist, daß die Gleichrichterschaltung mindestens ein Halbleiterventil und einen Speicher- bzw. Glättungskondensator enthält, daß der Pluspol der Gleichrichterschaltung an den
ersten Steuereingang der Auslöseschaltung angeschlossen ist und daß zwischen
dem Minuspol der Gleichrichterschaltung und dem zweiten Steuereingang der
Auslöseschaltung mindestens eine von einem Hilfsstrom durchflossene Hilfsimpedanz vorgesehen ist. Dabei kann die Gleichrichterschaltung als Brücken-

- 1 -

schaltung ausgeführt sein; vorzugsweise ist die Gleichrichterschaltung
jedoch als Villardschaltung, als Delonschaltung oder als Delonverdopplerschaltung ausgeführt. Der nach der Lehre der Erfindung die Hilfsimpedanz
durchfließende Hilfsstrom kann aus einer vorzugsweise aus der Netzspannung
abgeleiteten Steuerspannung abgeleitet sein, wobei die Steuerspannung über
eine Steuergleichrichterschaltung aus der Netzspannung abgeleitet sein kann.
Im übrigen empfiehlt es sich, in Reihe zu der Hilfsimpedanz einen Hilfswiderstand zu legen und damit den Hilfsstrom über die Hilfsimpedanz zu
begrenzen.

Wenn zuvor gesagt worden ist, daß bei der erfindungsgemäßen Fehlerstromschutzschaltung zwischen dem Minuspol der Gleichrichterschaltung und dem
zweiten Steuereingang der Auslöseschaltung mindestens eine von einem Hilfsstrom durchflossene Hilfsimpedanz vorgesehen ist, so meint Hilfsimpedanz
jedes Bauteil, an dem der durchfließende Hilfsstrom einen Spannungsabfall
erzeugt. Hilfsimpedanz steht also nicht nur als Sammelbegriff für einen
Widerstand, eine Spule (bzw. eine Induktivität) oder einen Kondensator
(bzw. eine Kapazität). Der Ausdruck Hilfsimpedanz soll auch eine Hilfsdiode umfassen; eine Hilfsdiode ist nämlich bei der erfindungsgemäßen
Fehlerstromschutzschaltung vorzugsweise als Hilfsimpedanz vorgesehen.

Bei der erfindungsgemäßen Fehlerstromschutzschaltung führt die Verwendung
einer Gleichrichterschaltung zwischen der Sekundärwicklung des Summenstromwandlers und der Auslöseschaltung zu einer Erhöhung der aus einem Fehlerstrom abgeleiteten Fehlerspannung; dies gilt insbesondere dann, wenn die
Gleichrichterschaltung als Verdopplerschaltung ausgeführt ist, z. B. als
Villardschaltung.

Nun ist es für sich bekannt, bei Fehlerstromschutzschaltungen an die Sekundärwicklung des Summenstromwandlers eine Gleichrichterschaltung, z. B.
eine Villardschaltung, anzuschließen (vgl. die DE-OS 32 44 670). Wendet
man nun ohne weiteres bei der Fehlerstromschutzschaltung, von der die

- 2 -

Erfindung ausgeht, die zuvor beschriebene, für sich bekannte Maßnahme - Gleichrichterschaltung, z. B. Villardschaltung, zwischen der Sekundärwicklung des Summenstromwandlers und der Auslöseschaltung - an, so erhöht sich damit leider nicht die Ansprechempfindlichkeit. Zwar verdoppelt sich die Fehlerspannung, es verdoppelt sich jedoch auch die Ansprechschwelle, - weil nunmehr statt einer Diodenstrecke, nämlich der Basis-Emitter-Strecke des Auslösetransistors, zwei Diodenstrecken vorliegen, nämlich zusätzlich die Diodenstrecke des Halbleiterventils der Gleichrichterschaltung.

Durch die bei der erfindungsgemäßen Fehlerstromschutzschaltung weiter verwirklichte Maßnahme, wonach zwischen dem Minuspol der Gleichrichterschaltung und dem zweiten Steuereingang der Auslöseschaltung mindestens eine von einem Hilfsstrom durchflossene Hilfsimpedanz vorgesehen ist, wird der Ausgang der Gleichrichterschaltung um den Spannungsabfall an der Hilfsimpedanz, z. B. um den Spannungsabfall von ca. 0,6 V an der Hilfsdiode, angehoben; damit wird der Spannungsabfall an der Diodenstrecke des Halbleiterventils der Gleichrichterschaltung eliminiert.

Im folgenden werden nun die Erfindung sowie Ausgestaltungen und Weiterbildungen der Erfindung anhand einer lediglich ein Ausführungsbeispiel darstellenden Zeichnung weiter erläutert.

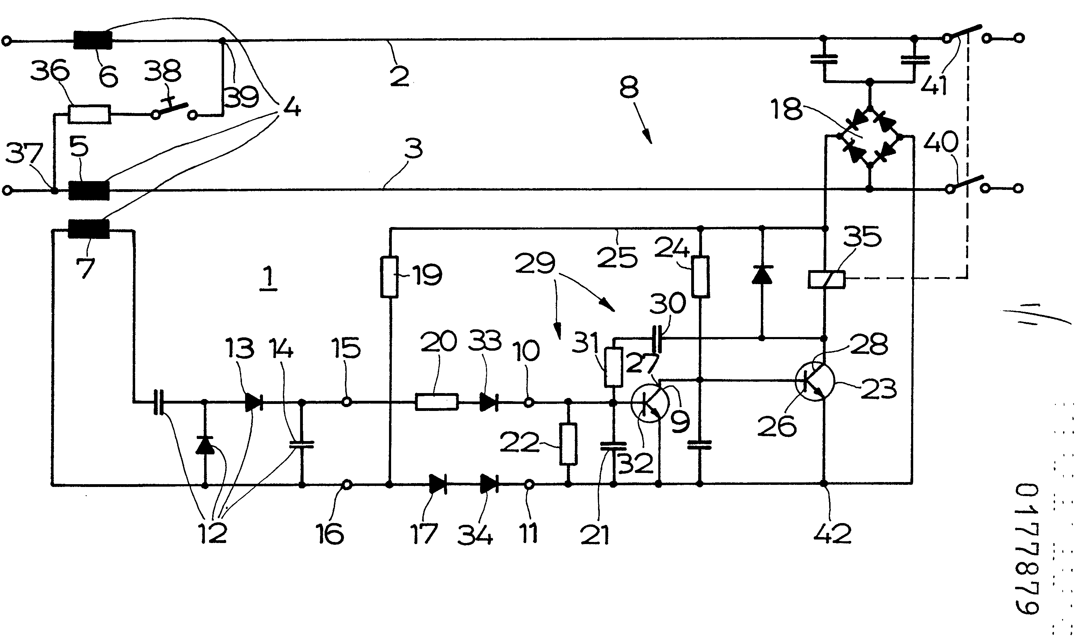

Die einzige Figur zeigt das Schaltbild einer Fehlerstromschutzschaltung 1, die in einen Netzspannung führenden Stromkreis - mit den elektrischen Leitungen 2, 3 - eingeschaltet ist und zunächst einen Summenstromwandler 4 mit zwei Primärwicklungen 5, 6 und einer Sekundärwicklung 7 und eine Auslöseschaltung 8 mit einem Auslösetransistor 9 und zwei Steuereingängen 10, 11 aufweist; die Auslöseschaltung 8 ist der Sekundärwicklung 7 des Summenstromwandlers 4 nachgeschaltet.

Wie die Figur zeigt, ist an die Sekundärwicklung 7 des Summenstromwandlers 4 eine Gleichrichterschaltung 12 angeschlossen, enthält die Gleichrichter-

- 3 -

schaltung 12 ein Halbleiterventil 13 und einen Speicher- bzw. Glättungskondensator 14, ist der Pluspol 15 der Gleichrichterschaltung 12 an den
ersten Steuereingang 10 der Auslöseschaltung 8 angeschlossen und ist
zwischen dem Minuspol 16 der Gleichrichterschaltung 12 und dem zweiten
Steuereingang 11 der Auslöseschaltung 8 eine von einem Hilfsstrom durchflossene Hilfsimpedanz 17 vorgesehen.

Im dargestellten Ausführungsbeispiel ist die Gleichrichterschaltung 12
als Villardschaltung ausgeführt. Der die Hilfsimpedanz 17 durchfließende
Hilfsstrom ist aus einer aus der Netzspannung abgeleiteten Steuerspannung
abgeleitet, wobei die Steuerspannung über eine Steuergleichrichterschaltung 18 aus der Netzspannung abgeleitet ist. In Reihe zu der Hilfsimpedanz 17, die als Hilfsdiode ausgeführt ist, liegt ein Hilfswiderstand 19,
der den Hilfsstrom begrenzt. Im übrigen ist der Gleichrichterschaltung 12
ein Entladewiderstand 20 nachgeschaltet und sind den beiden Steuereingängen 10, 11 der Auslöseschaltung 8 ein Glättungskondensator 21 und ein
Entladewiderstand 22 parallelgeschaltet.

Die Figur zeigt insoweit eine bevorzugte Ausführungsform der erfindungsgemäßen Fehlerstromschutzschaltung, als dem Auslösetransistor 9 ein Verstärkertransistor 23 nachgeschaltet ist. Dabei ist ein Steuerwiderstand 24
vorgesehen und der Steuerwiderstand 24 einerseits an den Pluspol 25 der
Steuerspannung und andererseits sowohl an die Basis 26 des Verstärkertransistors 23 als auch an den Kollektor 27 des Auslösetransistors 9 angeschlossen. Der Kollektor 28 des Verstärkertransistors 23 ist über ein
Rückkopplungsnetzwerk 29 aus einem Rückkopplungskondensator 30 und einem
Rückkopplungswiderstand 31 an die Basis 32 des Auslösetransistors 9 angeschlossen. Im übrigen ist der Gleichrichterschaltung 12 eine Entkoppeldiode 33 nachgeschaltet und in Reihe zu der als Hilfsimpedanz 17 vorgesehenen Hilfsdiode eine weitere Hilfsdiode 34 vorgesehen. Weiter ist ein
elektromagnetisches Schutzschalterelement 35 vorgesehen und einerseits
an den Pluspol 25 der Steuerspannung, andererseits an den Kollektor 28
des Verstärkertransistors 23 angeschlossen.

- 4 -

Schließlich zeigt die Figur noch insoweit eine bevorzugte Ausführungsform der erfindungsgemäßen Fehlerstromschutzschaltung 1, als ein Fehlerstromsimulierwiderstand 36 vorgesehen und einerseits an den Eingang 37
der ersten Primärwicklung 5 des Summenstromwandlers 4 angeschlossen,
andererseits über eine Fehlerstromsimuliertaste 38 mit dem Ausgang 39
der zweiten Primärwicklung 6 des Summenstromwandlers 4 verbindbar ist.

Zur Funktionsweise der erfindungsgemäßen Fehlerstromschutzschaltung 1
noch kurz folgendes:

Liegt an den elektrischen Leitungen 2, 3 Netzspannung an und ein Fehlerstrom nicht vor, so sind die Schaltkontakte 40, 41 des elektromagnetischen
Schutzschalterelementes 35 geschlossen. Vom Pluspol 25 der mit Hilfe der
Steuergleichrichterschaltung 18 gewonnenen Steuerspannung fließt über
den Steuerwiderstand 24 in die Basis 26 des Verstärkertransistors 23
ein Steuerstrom, so daß der Verstärkertransistor 23 leitend ist. Folglich fließt vom Pluspol der Steuerspannung 25 über das elektromagnetische
Schutzschalterelement 35 und die Kollektor-Emitter-Strecke 23 ein Erregerstrom zum Minuspol 42 der Steuerspannung; das elektromagnetische Schutzschalterelement 35 ist erregt.

Sobald ein hinreichend großer Fehlerstrom - größer als etwa 10 mA - auftritt, wird in der Sekundärwicklung 7 des Summenstromwandlers 4 eine entsprechende Fehlerspannung induziert, die mit Hilfe der Gleichrichterschaltung 12 gleichgerichtet und verdoppelt wird. Die gleichgerichtete und
verdoppelte Fehlerspannung hat zur Folge, daß der Auslösetransistor 9
leitend wird, so daß die Basis-Emitter-Strecke des Verstärkertransistors 23
über die Kollektor-Emitter-Strecke des Auslösetransistors 9 praktisch kurzgeschlossen wird und der Verstärkertransistor 23 sperrt, das elektromagnetische Schutzschalterelement 35 entregt wird.

- 5 -

0177879

Das bei der in der Figur dargestellten bevorzugten Ausführungsform der erfindungsgemäßen Fehlerstromschutzschaltung 1 vorgesehene Rückkopplungsnetzwerk 29 - aus dem Rückkopplungskondensator 30 und dem Rückkopplungswiderstand 31 - wirkt mitkoppelnd.

Wäre bei der erfingungsgemäßen Fehlerstromschutzschaltung 1 der Rückkopplungskondensator 30 nicht vorgesehen, also der Kollektor 28 des Verstärkertransistors 23 nur über den Rückkopplungswiderstand 31 mit der Basis 32 des Auslösetransistors 9 verbunden, so bliebe der einmal leitend gesteuerte Auslösetransistor 9 dauernd leitend, der Verstärkertransistor 23 dauernd gesperrt. Dadurch, daß der Kollektor 28 des Verstärkertransistors 23 über den Rückkopplungskondensator 30 und den Rückkopplungswiderstand 31 an die Basis 32 des Auslösetransistors 9 angeschlossen ist, geht der Auslösetransistor 9 wieder in den gesperrten Zustand, der Verstärkertransistor 23 wieder in den leitenden Zustand über, wenn kein Fehlerstrom bzw. kein hinreichend großer Fehlerstrom mehr vorliegt.

Wesentlich für die erfindungsgemäße Fehlerstromschutzschaltung 1 ist insbesondere, daß die unerwünscht auftretenden Spannungsabfälle am Halbleiterventil 13 und an der Entkoppeldiode 33 durch den Spannungsabfall an der als Hilfsimpedanz 17 vorgesehenen Hilfsdiode und der weiteren Hilfsdiode 34 kompensiert wird.

Die erfindungsgemäße Fehlerstromschutzschaltung 1 kann auf ihre Funktionsfähigkeit mit Hilfe des Fehlerstromsimulierwiderstandes 36 und der Fehlerstromsimuliertaste 38 überprüft werden. Bei geschlossener Fehlerstromsimuliertaste 38 fließt über den Fehlerstromsimulierwiderstand 36 ein Fehlerstrom, also ein Strom, der nicht über die beiden Primärwicklungen 5, 6 des Summenstromwandlers 4 fließt, hier nur über die zweite Primärwicklung 6 des Summenstromwandlers 4 fließt.

- 6 -

Patentansprüche:

1. Fehlerstromschutzschaltung mit einem Summenstromwandler, der mindestens zwei Primärwicklungen und mindestens eine Sekundärwicklung aufweist, und mit einer Auslöseschaltung, die mindestens einen Auslösetransistor und zwei Steuereingänge aufweist und der Sekundärwicklung des Summenstromwandlers nachgeschaltet ist, d a d u r c h   g e k e n n z e i c h n e t, daß an die Sekundärwicklung (7) des Summenstromwandlers (4) eine Gleichrichterschaltung (12) angeschlossen ist, daß die Gleichrichterschaltung (12) mindestens ein Halbleiterventil (13) und einen Speicher- bzw. Glättungskondensator (14) enthält, daß der Pluspol (15) der Gleichrichterschaltung (12) an den ersten Steuereingang (10) der Auslöseschaltung (8) angeschlossen ist und daß zwischen dem Minuspol (16) der Gleichrichterschaltung (12) und dem zweiten Steuereingang (11) der Auslöseschaltung (8) mindestens eine von einem Hilfsstrom durchflossene Hilfsimpedanz (17) vorgesehen ist.

2. Fehlerstromschutzschaltung nach Anspruch 1, dadurch gekennzeichnet, daß die Gleichrichterschaltung (12) als Brückenschaltung, als Villardschaltung, als Delonschaltung oder als Delonverdopplerschaltung ausgeführt ist.

3. Fehlerstromschutzschaltung nach Anspruch 1 oder 2, dadurch gekennzeichnet, daß der die Hilfsimpedanz (17) durchfließende Hilfsstrom aus einer Steuerspannung abgeleitet und die Steuerspannung vorzugsweise über eine Steuergleichrichterschaltung (18) aus der Netzspannung abgeleitet ist.

4. Fehlerstromschutzschaltung nach einem der Ansprüche 1 bis 3, dadurch gekennzeichnet, daß als Hilfsimpedanz (17) eine Hilfsdiode vorgesehen ist.

5. Fehlerstromschutzschaltung nach einem der Ansprüche 1 bis 4, dadurch gekennzeichnet, daß den beiden Steuereingängen (10, 11) der Auslöseschaltung (8) ein Glättungskondensator (21) und ein Entladewiderstand (22) parallelgeschaltet sind.

- 1 -

6. Fehlerstromschutzschaltung nach einem der Ansprüche 1 bis 5, dadurch gekennzeichnet, daß dem Auslösetransistor (9) ein Verstärkertransistor (23) nachgeschaltet ist.

7. Fehlerstromschutzschaltung nach Anspruch 6, wobei eine vorzugsweise aus der Netzspannung abgeleitete Steuerspannung vorhanden ist, dadurch gekennzeichnet, daß ein Steuerwiderstand (24) vorgesehen ist und der Steuerwiderstand (24) einerseits an den Pluspol (25) der Steuerspannung und andererseits sowohl an die Basis (26) des Verstärkertransistors (23) als auch an den Kollektor (27) des Auslösetransistors (9) angeschlossen ist.

8. Fehlerstromschutzschaltung nach Anspruch 7, dadurch gekennzeichnet, daß der Kollektor (28) des Verstärkertransistors (23) über ein Rückkopplungsnetzwerk (29) aus einem Rückkopplungskondensator (30) und einem Rückkopplungswiderstand (31) an die Basis (32) des Auslösetransistors (9) angeschlossen ist.

9. Fehlerstromschutzschaltung nach Anspruch 8, dadurch gekennzeichnet, daß der Gleichrichterschaltung (12) eine Entkoppeldiode (33) nachgeschaltet und in Reihe zu der als Hilfsimpedanz (17) vorgesehenen Hilfsdiode eine weitere Hilfsdiode (34) vorgesehen ist.

10. Fehlerstromschutzschaltung nach einem der Ansprüche 7 bis 9, dadurch gekennzeichnet, daß ein elektromagnetisches Schutzschalterelement (35) vorgesehen und einerseits an den Pluspol (25) der Steuerspannung, andererseits an den Kollektor (28) des Verstärkertransistors (23) angeschlossen ist.

11. Fehlerstromschutzschaltung nach einem der Ansprüche 1 bis 10, dadurch gekennzeichnet, daß ein Fehlerstromsimulierwiderstand (36) vorgesehen und einerseits an den Eingang (37) der ersten Primärwicklung (5) des Summen-

- 2 -

stromwandlers (4) angeschlossen, andererseits über eine Fehlerstromsimuliertaste (38) mit dem Ausgang (39) der zweiten Primärwicklung (6) des
Summenstromwandlers (4) verbindbar ist.

- 3 -

0177879